# EUROPEAN PATENT APPLICATION

(11) **EP 2 590 295 A1**
(43) Date of publication of application: **08.05.2013**
(21) Application number: 10854108.7
(22) Date of filing: 01.07.2010
(51) Int. Cl.: H02J 7/00

(54) **THIN-FILM CAPACITOR DISCHARGING APPARATUS**

(71) Applicant: Shimizu, Kanji, Kobe-shi, Hyogo 651-2114 (JP); Enzo Planning Co., Ltd., Tokyo 150-0011 (JP); Takanashi, Kazuhiko, Tokyo 166-0003 (JP); K.S. International Co., Ltd., Koto-ku Tokyo 136-0072 (JP)
(72) Inventor: Shimizu, Kanji, Kobe-shi Hyogo 651-2114 (JP)
(74) Representative: Grünecker, Kinkeldey, Stockmair & Schwanhäusser
(86) International application number: PCT/JP2010/061288
(87) International publication number: WO 2012/001811

(57) **Abstract**

The invention provides a thin-film capacitor discharging apparatus with an inexpensive configuration that can stably produce a constant voltage upon discharging a thin-film capacitor. The thin-film capacitor discharging apparatus is featured by discharging a thin-film capacitor for use in a direct current circuit, and including a discharging function serving as a hybrid such that direct current is received from the thin-film capacitor with voltage becoming lowered to temporarily store electric charge to supply the direct current to a DC/DC inverter while a basic voltage remains until the thin-film capacitor becomes completely empty of electric charge.

## Description

### TECHNICAL FIELD

The present invention relates to a thin-film capacitor discharging apparatus.

### BACKGROUND ART

A thin-film capacitor uses electric energy stored in collectors formed in a surface boundary between electrode and dielectric materials and has a large electric capacitance, Capable Of charging and discharging a huge amount of electric charge in a short time, in the order of several-thousand farads.
As usage, it can be used in a wide range from small-capacity products for memory backup, medium-capacity products for use in power assisted electric vehicles and up to large-capacity products as battery alternatives for power source, such as power supplies of electric vehicles.

The with stand voltage of a unit capacitor (also referred to as a cell) in those thin-film capacitors is dependent upon the withstand voltage of dielectric material which is a constituent element thereof, i.e. an insulator for separating electrons from holes, and thus upon its substance, thin-film thickness, homogeneity and the like. For example, titanic acid barium-based dielectric material is of about 200V.
In addition, since the thin-film capacitor may be broken down when applied by a voltage higher than the withstand voltage of its dielectric material, plural capacitors are connected in series in applications where a high voltage is required.

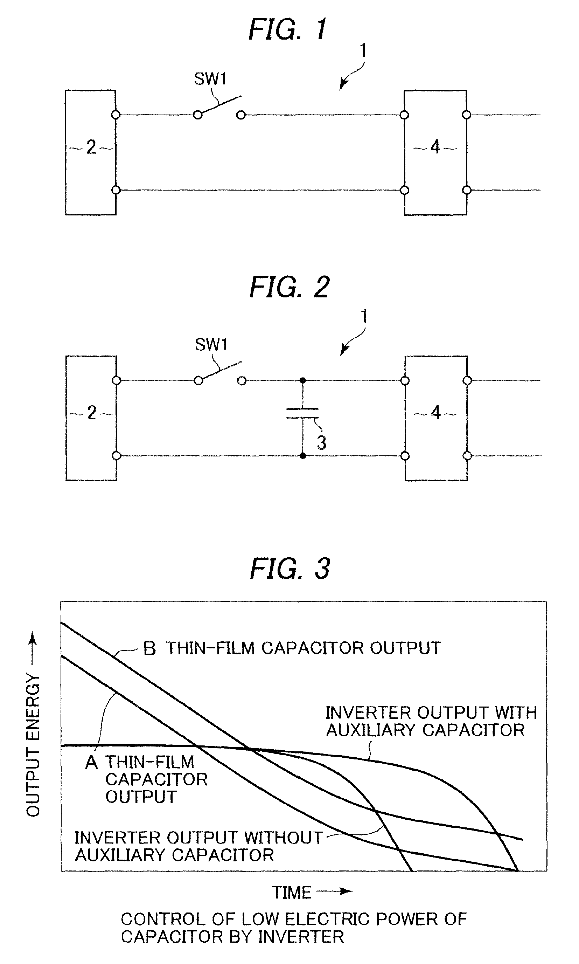

As described above, when electric charge stored in a single or plural capacitors is discharged, rapid discharge would, if discharged without any measures, follow a descending curve shown by a thin-film capacitor output A in FIG. 3.
In order to make the output flatter, an inverter is used. However, when the capacitor output lowers below a threshold value, it is impossible to preform inversion.
For that reason, in order to increase the threshold value, a capacitor having its capacitance at least equal to or exceeding the threshold value is additionally provided in is the form of hybrid for smoothening, thereby making it possible to perform discharging until the amount of electric charge stored in the storage capacitor becomes zero.
Generally, as technology for charging and discharging a capacitor, there is disclosed in, for example, patent document 1.
Patent Document 1: Japanese patent laid-open publication No. 2004-215332.

### SUMMARY OF THE INVENTION

### PROBLEM(S) TO BE SOLVED BY THE INVENTION

In order to discharge a thin-film capacitor, a direct connection of the thin-film capacitor to an inverter, as shown in FIG. 1, would not allow the inverter to conduct inversion if current is lower than its threshold value, which would cause a situation where the discharging may be useless.

It is an object of the present invention to provide a thin-film capacitor discharging apparatus with an inexpensive configuration, which allows an inverter, when discharging a thin-film capacitor, to perform smoothing inversion continuously up to the amount of electric charge becoming zero.

### MEASURES TO SOLVE THE PROBLEM(S)

In order to solve the aforementioned problems, a thin-film capacitor discharging apparatus for use in a direct for in current circuit in accordance with claim 1 comprises a circuit with a discharging function serving as a hybrid such that direct current is received from the thin-film capacitor with voltage becoming lowered to temporarily store electric charge to supply the direct current to a DC/DC converter while a basic voltage remains until the thin-film capacitor becomes completely empty of electric of charge.

### ADVANTAGES OF THE INVENTION

The hybrid system continues a discharging function such that direct current is received from a thin-film capacitor with is from a voltage becoming lowered to temporarily store electric charge to supply the direct current to a DC/DC inverter while a basic voltage remains until the thin-film capacitor becomes completely empty of electric charge. Therefore, a constant of voltage can stably be produced in a longer time when discharging the thin-film capacitor for use in a direct current circuit with an inexpensive configuration.

### BRIEF DESCRIPTION OF THE DRAWINGS

FIG. 1 is a circuit diagram showing the state of a thin-film capacitor discharging apparatus without including an auxiliary thin-film capacitor;
FIG. 2 is a circuit diagram schematically showing a thin-film capacitor discharging apparatus in accordance with in an embodiment; and
FIG. 3 is a graph comparatively showing how the inversion proceeds to in circuits with and without an auxiliary capacitor provided.

### LIST OF REFERENCE NUMERALS

1. Circuit diagram of thin-film capacitor discharging apparatus;

| | |
|---|---|
| 2. | Thin-film capacitor; |
| 3. | Auxiliary capacitor; |
| 4. | DC/DC inverter; and |
| SW1. | Operating switch |

### BEST MODE FOR IMPLEMENTING THE INVENTION

In the following, a preferred embodiment of a thin-film capacitor discharging apparatus in accordance with the present invention will be described in more detail by the aid of an example shown below.

### EMBODIMENT 1

An embodiment in accordance with the present invention will be described according to FIG. 2.
FIG. 1 shows, as described previously, a circuit having a thin-film capacitor 2 and a DC/DC inverter 4 connected directly to each other. It is in a situation where the inverter cannot perform inversion when current is lower than its threshold value, which makes effective discharging impossible.
In the figure, a symbol SW1 denotes an operation switch.

FIG. 2 is a circuit diagram 1 schematically showing the thin-film capacitor discharging apparatus in accordance with the instant embodiment, in which in order to discharge the thin-film capacitor 2 an auxiliary capacitor 3 is additionally provided to continue inversion until the amount of electric charge in the thin-film capacitor 2 becomes zero.
In the figure, a reference numeral 4 denotes a DC/DC inverter and the symbol SW1 denotes the operating switch.

FIG. 3 comparatively shows how inversion proceeds to in the circuits with and without the auxiliary capacitor 3 provided as in the instant embodiment.

As clear from the above, a disharging function is established such that the provision of an auxiliary capacitor like in case of the present embodiment causes stable, constant voltage to continuously be produced in a longer period, until a thin-film capacitor becomes completely empty of electric charge, than in the case without having an auxiliary capacitor.

That is caused by a discharging function such that direct current is received from the thin-film capacitor 2 with the voltage becoming lowered to temporarily store electric charge to supply the direct current to the DC/DC inverter 4 while a basic voltage remains until the thin-film capacitor becomes completely empty of electric charge.
The present invention is not to be restricted by the embodiment described so far, but may be varied in design within the scope not departing from the gist thereof.

## Claims

1. A thin-film capacitor disharging apparatus for use in a direct current circuit for disharging a thin-film capacitor, **characterized by** comprising
a discharging function serving as a hybrid such that direct current is received from the thin-film capacitor with voltage becoming lowered to temporarily store electric charge to supply the direct current to a DC/DC inverter while a basic voltage remains until the thin-film capacitor becomes completely empty of electric charge.
